# EUROPEAN PATENT APPLICATION

(11) **EP 4 852 199 A1**
(43) Date of publication of application: **09.12.2026**
(21) Application number: 24921903.1
(22) Date of filing: 20.12.2024
(51) Int. Cl.: H01M 50/491, D04H 1/4326, D04H 1/728, H01M 50/414, H01M 50/44, H01M 50/489

(54) **POROUS STRUCTURE**

(30) Priority: 31.01.2024 JP 2024012849
(71) Applicant: RESONAC CORPORATION, Tokyo 105-7325 (JP)
(72) Inventor: OCHIAI, Mitsuki, Tokyo 105-7325 (JP); MIURA, Saori, Tokyo 105-7325 (JP)
(74) Representative: Hoffmann Eitle
(86) International application number: PCT/JP2024/045285
(87) International publication number: WO 2025/164150

(57) **Abstract**

A porous structure including a polyimide resin, wherein the porous structure has a porosity of 20% or more. The porous structure may be a nonwoven fabric formed from nanofibers including a polyimide resin, and can be favorably used as a battery separator for a lithium ion secondary battery or the like.

## Description

### TECHNICAL FIELD

An embodiment of the present invention relates to a porous structure including a polyimide resin.

### BACKGROUND ART

A porous structure has multiple voids inside and on the surface, and is used in various fields due to its various functions. Generally, a porous structure is required to have a high porosity, excellent air permeability, and a thin shape, while having sufficient mechanical strength.

For example, in the field of energy devices, porous structures can be used as separators. Porous structures made from polypropylene (PP) or the like have been widely used as separators in the field of lithium secondary batteries, and improvements to meet various demands have been studied. For example, Patent Literature 1 discloses a polypropylene (PP) porous film provided with an inorganic or ceramic coating in order to improve mechanical strength and heat resistance in separator applications.

However, many PP porous films disclosed in separator applications are configured as a multilayer structure including a PP substrate and a porous layer. Thus, it is difficult to meet the demand for thinner films with the configuration of conventional PP porous films. In addition, from the viewpoint of obtaining excellent battery properties, it is desired that separators have excellent wettability by an electrolytic solution. However, the wettability by the electrolytic solution is not sufficiently satisfactory for PP substrates, which greatly affects physical properties of PP porous films, and there is room for improvement.

### CITATION LIST

### PATENT LITERATURE

Patent Literature 1: Japanese Translation of PCT International Application Publication No. 2015-503201

### SUMMARY OF INVENTION

### PROBLEMS TO BE SOLVED BY INVENTION

In contrast, polyimide resins are used in various fields because of their excellent heat resistance, mechanical strength, chemical resistance, etc. In the field of energy devices, separators having high heat resistance and high strength are desired with the recent increase in battery capacity, and the development of separators using polyimide resins is expected. However, in general, it is not easy to produce porous structures such as porous films and nonwoven fabrics which mainly contain a polyimide resin. Therefore, there is a need for a porous structure that includes a polyimide resin and has properties favorable for use as separators and the like, for example.

Accordingly, in view of such a situation, an embodiment of the present invention provides a porous structure that includes a polyimide resin and has excellent wettability by an electrolytic solution.

The present invention includes the following embodiments. However, the present invention is not limited to the following embodiments and includes various embodiments.
<1> A porous structure including a polyimide resin, wherein the porous structure has a porosity of 20% or more.
<2> The porous structure according to <1> above, wherein a contact angle of water is 90° or more.
<3> The porous structure according to <1> or <2> above, wherein the porous structure is used as a separator for a battery.
<4> The porous structure according to any one of <1> to <3> above, wherein a contact angle of an electrolytic solution is 10° or less.
<5> The porous structure according to any one of <1> to <4> above, wherein the porous structure is used as a separator for a lithium ion secondary battery.
<6> The porous structure according to any one of <1> to <5> above, wherein the porous structure is a nonwoven fabric formed from nanofibers including a polyimide resin.
<7> The porous structure according to <6> above, wherein the nanofibers have an average diameter of 1 to 1,000 nm.

The disclosure of the present application relates to the subject matter described in Japanese Patent Application No. 2024-012849 filed on January 31, 2024, the entire contents of which is incorporated herein by reference.

### EFFECTS OF INVENTION

According to one or more embodiments of the present invention, it is possible to provide a porous structure, such as a porous film and a nonwoven fabric, which includes a polyimide resin and has excellent wettability.

### DESCRIPTION OF EMBODIMENTS

Embodiments of the present invention will be described below. However, the present invention is not limited to the following embodiments and includes various embodiments.

Note that a numerical range indicated using "to" in the present disclosure means a range that includes numerical values described before and after "to" as the minimum and maximum values, respectively.

In numerical ranges described step by step in the present disclosure, an upper or lower limit of a numerical range may be replaced with an upper or lower limit of another numerical range. An upper or lower limit of a numerical range described in the present disclosure may be replaced with a value indicated in examples.

A certain numerical value may be selected from the upper limit numerical values described step by step in the present disclosure, and a certain numerical value may be selected from the lower limit numerical values described step by step in the present disclosure, to form another step by step numerical range.

An upper limit numerical value and a lower limit numerical value described in the present disclosure may be replaced with values indicated in examples.

Each component described in the present disclosure may include multiple types of substances corresponding thereto. When there are multiple types of substances corresponding to each component in a composition, the content or amount contained of each component means, unless otherwise specified, the total content or the total amount contained of the multiple types of substances present in the composition.

In the present disclosure, each structure in a polymer (resin) may include multiple types of structures corresponding thereto. When there are multiple types of structures corresponding to each structure in a resin, the content or amount contained of each structure means, unless otherwise specified, the total content or the total amount contained of the multiple types of structures present in the resin.

### <1> Porous structure

An embodiment of the present invention relates to a porous structure that includes a polyimide resin and has a porosity of 20% or more. Generally, when the porosity of the porous structure increases, properties such as permeability, flexibility, elongation, and the like, are easily improved, while mechanical strength tends to decrease. In contrast, since the porous structure according to the present embodiment is formed with a polyimide resin, it is easy to balance porosity and mechanical strength.

The porous structure may further include an additive, such as an inorganic filler, as necessary. However, from the viewpoint of fully exerting the function of the polyimide resin, the amount contained of the polyimide resin is preferably 50% by mass or more relative to the total mass of the porous structure. The above amount contained of the polyimide resin is more preferably 60% by mass or more, more preferably 70% by mass or more, and even more preferably 80% by mass or more. In one embodiment, the amount contained may be 90% by mass or more, and may be 100% by mass. Multiple types of polyimide resins may be used in combination to form the porous structure, and a polyimide resin having treated ends may be included.

From the viewpoint of sufficiently obtaining the functionality due to voids, it is preferable to increase the number of voids in the porous structure to increase a specific surface area. In one embodiment, the porosity in the porous structure is preferably at least 20%. When the porous structure of the polyimide resin has a porosity of 20% or more, and for example, is used as a separator in a battery, excellent wettability by an electrolytic solution tends to be easily obtained. The average pore size of voids is preferably within a range from 0.1 to 20 µm, more preferably from 0.1 to 10 µm, and even more preferably from 0.1 to 5 µm. In the porous structure, multiple voids preferably communicate with the surface from the inside.

In one embodiment, the porosity in the porous structure is more preferably 30% or more, even more preferably 40% or more, and particularly preferably 50% or more. In contrast, from the viewpoint of maintaining handleability and mechanical strength of the porous structure, the porosity is preferably 90% or less, more preferably 85% or less, and even more preferably 80% or less.

Here, porosity means a value calculated from equation (1) below. 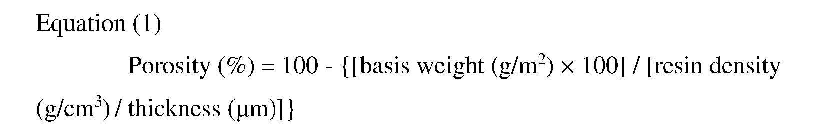 Porosity (%) = 100 - {[basis weight (g/m2) × 100] / [resin density (g/cm3) / thickness (µm)]} Equation (1)

In one embodiment, the porosity of the porous structure may be within a range from 20% to 90%, and the porous structure is preferably in the form of a porous film or a nonwoven fabric, including a polyimide resin. The porous structure including a polyimide resin may be either a single-layer structure, or a multi-layer structure having a layer including a polyimide resin. The single-layer structure is preferable from the viewpoint of easily obtaining properties of the polyimide resin.

For example, when a porous film is produced, a resin solution is applied to a substrate, and the coating film is dried and/or cured to form a film on the substrate. In this method, it is necessary to peel the film from the substrate. Thus, if the film thickness is too small, handling tends to be difficult. If the film thickness is too large, it tends to be difficult to obtain a uniform film. From this viewpoint, the thickness of the porous film may preferably be within a range from 10 to 200 µm, more preferably from 10 to 100 µm, and even more preferably from 10 to 50 µm. In contrast, in the case of a nonwoven fabric, the thickness can be easily reduced because a spinning method can be applied, and handleability is excellent. For example, the thickness of the nonwoven fabric can be adjusted within a range from 5 to 50 µm.

The porous film and the nonwoven fabric can be produced according to a known method using a resin solution including at least a polyimide resin (polyimide resin precursor) and a solvent, as described below. Although not particularly limited, the porous structure is preferably a nonwoven fabric from the viewpoint that high porosity and a uniform surface structure can be easily obtained. In one embodiment, when a porous film including a polyimide resin is used as a separator, the porosity may preferably be within a range from 20% to 60%, more preferably from 20% to 40%, and even more preferably from 20% to 30%. When the porosity of the porous film is adjusted to the above ranges, it tends to be easy to obtain good wettability by an electrolytic solution.

Wettability of the porous structure can be evaluated based on a contact angle between the surface of the porous structure and a liquid. For example, when the porous structure is used as a separator for a lithium ion secondary battery, it is preferable that the porous structure have excellent wettability by an electrolytic solution. A typical PP porous film made from polypropylene (PP) as a separator may have insufficient wettability by an electrolytic solution. In order to improve the wettability by the electrolytic solution in the typical PP porous film, it is preferable that the electrolytic solution contact angle to the porous structure be smaller than the electrolytic solution contact angle to the PP porous film. From such a viewpoint, the electrolytic solution contact angle to the porous structure according to the present embodiment may be, for example, 45° or less, more preferably 30° or less, and even more preferably 20° or less.

In one embodiment, since the porous structure can sufficiently hold an electrolytic solution, the electrolytic solution contact angle to the porous structure may be preferably 20° or less, more preferably 15° or less, and even more preferably 10° or less. In one embodiment, the electrolytic solution contact angle to the porous structure may be 0°. When the contact angle of the electrolytic solution is 0°, the electrolytic solution penetrates into the porous structure and is retained inside. When the porous structure has a porosity of at least 20%, the electrolytic solution contact angle within the above ranges can be easily obtained.

In the above embodiment, the electrolytic solution may have a composition of an electrolytic solution normally used in a lithium-ion secondary battery. The electrolytic solution typically includes a nonaqueous solvent and an electrolyte, and the nonaqueous solvent may be a mixed solvent including two or more solvents.

In one embodiment, the nonaqueous solvent may be a mixed solvent including two or more selected from the group consisting of ethylene carbonate (EC), ethyl methyl carbonate (EMC), and diethyl carbonate (DEC). For example, in the mixed solvent, the mixing ratio (volume ratio) of EC:EMC:DEC may be 3:5:5. An electrolyte that can be used to form an electrolytic solution may be, for example, lithium hexafluorophosphate (LiPF₆), and the amount of the electrolyte used in 1 L of the electrolytic solution may be approximately 1 mole. The electrolytic solution may further include an additive, such as vinylene carbonate (VC) or fluoroethylene carbonate (FEC), as necessary. The amount contained of the additive may be within a range from 0.1% to 10% by mass relative to the total mass of the electrolytic solution.

In one embodiment, the water contact angle of the porous structure may preferably be 80° or more, more preferably 90° or more, and even more preferably 100° or more. In contrast, the above water contact angle may preferably be 130° or less, more preferably 120° or less, and even more preferably 110° or less. In the porous structure according to the present embodiment, the body is made from a polyimide resin, and thus the water contact angle within the above ranges can be easily obtained.

When the water contact angle relative to the porous structure is adjusted within the above ranges, excellent water repellency can be easily achieved. Thus, for example, the porous structure can be suitably used as a separation membrane (separation filter), such as an oil-water separation membrane and a gas-liquid separation membrane, and excellent separation function can be easily obtained. The porous structure can also be used as a fuel cell separator. Here, the surface of the porous structure has water repellency, and thus formed water can be easily discharged when the fuel cell is operated.

In the above embodiment, the electrolytic solution contact angle and the water contact angle are values measured using a θ/2 method. A commercially available contact angle measuring instrument can be used for the measurement. Specific measurement methods and measurement conditions are as explained in examples described below.

Since excellent wettability is easily obtained, the porous structure according to the present embodiment can be favorably used as a separator for lithium batteries. From this viewpoint, one embodiment of the present invention is a lithium secondary battery that includes an anode and a cathode, a separator, and an electrolytic solution, and uses the porous structure according to the above embodiment as the separator.

The porous structure according to the present embodiment has various functions such as separation, adsorption, heat insulation, and sound absorption. Thus, the porous structure according to the present embodiment is not limited to being used as a separator for batteries, such as a lithium secondary battery, but can also be favorably used in various applications. For example, the porous structure can be favorably used in various applications, such as separation filters, adsorption materials, and heat insulation materials.

### <2> Resin solution including polyimide resin precursor

A polyimide resin can typically be produced by reacting diamine with a tetracarboxylic dianhydride to form a polyimide resin precursor (polyamic acid), and then imidizing the polyamic acid through heat treatment. Since polyimide resin has poor solubility, it is difficult to prepare a polyimide resin solution for producing a porous structure. Thus, one embodiment of the present invention may be a resin solution including a polyimide resin precursor (polyamic acid) and an organic solvent. Since a polyamic acid can form a polyimide resin through heat treatment, a porous structure including a polyimide resin can be produced by using the above-described resin solution. The polyimide resin precursor will be specifically described below.

### (Polyimide resin precursor)

The polyimide resin precursor includes a polyamic acid, and part of the polyamic acid may be imidized. The polyamic acid can be produced according to a known method. For example, the polyamic acid can be obtained by reacting diamine with a tetracarboxylic dianhydride. The diamine and tetracarboxylic dianhydride, which can be used as raw materials, may be either aliphatic or aromatic compounds, and multiple types may be optionally combined. From the viewpoint of heat resistance, the polyimide resin is preferably an aromatic polyimide resin. Thus, aromatic diamines and aromatic tetracarboxylic dianhydrides can be favorably used.

Specific examples of aromatic diamines include p-phenylenediamines, m-phenylenediamines, 1,4-diaminonaphthalene, 1,5-diaminonaphthalene, 1,8-diaminonaphthalene, 2,6-diaminonaphthalene, 2,7-diaminonaphthalene, 2,6-diaminoanthracene, 2,7-diaminoanthracene, 1,8-diaminoanthracene, 2,4-diaminotoluene, 2,5-diamino(m-xylene), 2,5-diaminopyridine, 2,6-diaminopyridine, 3,5-diaminopyridine, 2,4-diaminotoluenebenzidine, 3,3'-diaminobiphenyl, 3,3'-dichlorobenzidine, 3,3'-dimethylbenzidine, 3,3'-dimethoxybenzidine, 2,2'-diaminobenzophenone, 4,4'-diaminobenzophenone, 3,3'-diaminodiphenyl ether, 4,4'-diaminodiphenyl ether, 3,4'-diaminodiphenyl ether, 3,3'-diaminodiphenylmethane, 4,4'-diaminodiphenylmethane, 4,4'-diaminodiphenylmethane, 3,4'-diaminodiphenylsulfone, 4,4'-diaminodiphenylsulfone, 3,3'-diaminodiphenylsulfide, 3,4'-diaminodiphenylsulfide, 4,4'-diaminodiphenylsulfide, 4,4'-diaminodiphenylthioether, 4,4'-diamino-3,3',5,5'-tetramethyldiphenyl ether, 4,4'-diamino-3, 3',5,5'-tetraethyldiphenyl ether, 4,4'-diamino -3,3',5,5'-tetramethyldiphenylmethane, 1,3-bis(3-aminophenoxy)benzene, 1,3-bis(4-aminophenoxy)benzene, 1,4-bis(3-aminophenoxy)benzene, 1,4-bis(4-aminophenoxy) benzene, 2,6-bis(3-aminophenoxy)pyridine, 1,4-bis(3-aminophenylsulfonyl)benzene, 1,4-bis(4-aminophenylsulfonyl)benzene, 1,4-bis(3-aminophenylthioether)benzene, 1,4-bis(4-aminophenylthioether)benzene, 4,4'-bis(3-aminophenoxy)diphenylsulfone, 4,4'-bis(4-aminophenoxy)diphenyl sulfone, bis(4-aminophenyl)amine bis(4-aminophenyl)-N-methylamine bis(4-aminophenyl)-N-phenylamine bis(4-aminophenyl)phosphine oxide, 1,1-bis(3-aminophenyl)ethane, 1,1-bis(4-aminophenyl)ethane, 2,2-bis(3-aminophenyl)propane, 2,2-bis(4-aminophenyl)propane, 2,2-bis(4-amino-3,5-dimethylphenyl)propane, 4,4'-bis(4-aminophenoxy)biphenyl, bis[4-(3-aminophenoxy)phenyl]sulfone, bis[4-(4-aminophenoxy)phenyl]sulfone, bis[4-(4-aminophenoxy)phenyl]ether, bis[4-(4-aminophenoxy)phenyl]methane, bis[3-methyl-4-(4-aminophenoxy)phenyl]methane, bis[3-chloro-4-(4-aminophenoxy)phenyl]methane, bis [3,5-dimethyl-4-(4-aminophenoxy)phenyl]methane, 1,1-bis[4-(4-aminophenoxy)phenyl]ethane, 1,1-bis[3-methyl-4-(4-aminophenoxy)phenyl]ethane, 1,1-bis[3-chloro-4-(4-aminophenoxy)phenyl]ethane, 1,1-bis[3,5-dimethyl-4-(4-aminophenoxy)phenyl]ethane, 2,2-bis[4-(4-aminophenoxy)phenyl]propane, 2,2-bis[3-methyl-3-4-(4-aminophenoxy)phenyl]propane, 2,2-bis[3-chloro-4-(4-aminophenoxy)phenyl]propane, 2,2-bis[3, 5-dimethyl-4-(4-aminophenoxy)phenyl]propane, 2,2-bis[4- (4-aminophenoxy)phenyl]butane, 2,2-bis[3-methyl-4-(4-aminophenoxy)phenyl]butane, 2,2-bis[3,5-dimethyl-4-(4-aminophenoxy)phenyl]butane, 2,2-bis[3,5-dibromo-4-(4-aminophenoxy)phenyl]butane, 1,1,1,3,3,3-hexafluoro-2,2-bis(4-aminophenyl)propane, and 1,1,1,3,3,3-hexafluoro-2,2-bis[3-methyl-4-(4-aminophenoxy)phenyl]propane. Aromatic diamines and aliphatic diamines may be used together as necessary.

Specific examples of aromatic tetracarboxylic dianhydrides include pyromellitic dianhydrides, 3,3',4,4'-biphenyltetracarboxylic dianhydrides, 2,3,5,6-pyridine tetracarboxylic dianhydride, 2,3,4,5-thiophene tetracarboxylic dianhydride, 2,2',3,3'-benzophenone tetracarboxylic dianhydride, 2,3',3,4'-benzophenone tetracarboxylic dianhydride, 3,3',4,4'-benzophenone tetracarboxylic dianhydride, 2,2',3,3'-biphenyltetracarboxylic dianhydride, 2,3,3',4'-biphenyltetracarboxylic dianhydride, 3,3',4,4'-p-terphenyltetracarboxylic dianhydride, 2,2',3,3'-p-terphenyltetracarboxylic dianhydride, 2,3,3',4'-p-terphenyltetracarboxylic dianhydride, 1,2,4,5-naphthalene tetracarboxylic dianhydride, 1,2,5,6-naphthalene tetracarboxylic dianhydride, 1,2,6,7-naphthalene tetracarboxylic dianhydride, 1,4,5,8-naphthalene tetracarboxylic dianhydride, 2,3,6,7-naphthalene tetracarboxylic dianhydride, 2,3,6,7-anthracene tetracarboxylic dianhydride, 1,2,5,6-anthracene tetracarboxylic dianhydride, 1,2,6,7-phenanthrenetetracarboxylic dianhydride, 1,2,7,8-phenanthrenetetracarboxylic dianhydride, 1,2,9,10-phenanthrenetetracarboxylic dianhydride, 3,4,9,10-perylenetetracarboxylic dianhydride, 2,6-dichloronaphthalene-1,4,5,8-tetracarboxylic dianhydride, 2,7-dichloronaphthalene-1,4,5,8-tetracarboxylic dianhydride, 2,3,6,7-tetrachloronaphthalene-1,4,5,8-tetracarboxylic dianhydride, 1,4,5,8-tetrachloronaphthalene-2,3,6,7-tetracarboxylic dianhydride, 4,4'-oxydiphthalic anhydride, 4,4'-(hexafluoroisopropylidene)diphthalic anhydride, 1,2,4,5-cyclohexanetetracarboxylic dianhydride, 3-(carboxymethyl)-1,2,4-cyclopentanetricarboxylic 1,4:2,3-dianhydride, and 3,3',4,4'-diphenylsulfontetracarboxylic dianhydride. As necessary, an aromatic tetracarboxylic dianhydride and an aliphatic tetracarboxylic dianhydride may be used together.

The ratio of the diamine to the tetracarboxylic dianhydride may be adjusted appropriately. For example, from the viewpoint of the molecular weight and crosslinking degree of a produced polyamic acid, the diamine is, relative to the total amount of the acid dianhydride 1.0 mol, preferably within a range from 0.8 to 1.2 mol, more preferably from 0.85 to 1.15 mol, and even more preferably from 0.90 to 1.10 mol.

In one embodiment, the polyamic acid may be treated with an end-capping agent. As the end-capping agent, for example, a phthalic anhydride, a hexahydrophthalic anhydride, aniline, or the like may be used.

The number average molecular weight of the polyimide resin precursor (polyamic acid) forming the resin solution is preferably 20,000 or more from the viewpoint of ensuring mechanical strength in producing the porous structure. In contrast, the above number average molecular weight is preferably 500,000 or less from the viewpoint of ensuring solubility in organic solvents. In one embodiment, since the viscosity can be easily adjusted to a level favorable for a spinning process during nonwoven fabric production, the above number average molecular weight is preferably 400,000 or less, more preferably 300,000 or less, and more preferably 200,000 or less.

The number average molecular weight of the polyamic acid can be controlled within the above preferable ranges by performing sampling during resin synthesis, performing measurement with gel permeation chromatography (GPC) using a standard polystyrene calibration curve, and continuing synthesis until a desired number average molecular weight is obtained. Measurement conditions of GPC will be specifically described in the following examples.

In one embodiment, the number average molecular weight of the polyamic acid may preferably be within a range from 20,000 to 200,000, more preferably from 50,000 to 200,000, and even more preferably from 50,000 to 150,000. When a polyimide resin having the number average molecular weight within the above ranges is used, it becomes easy to obtain a good balance between heat resistance and solubility. Consequently, it becomes possible to perform spinning using an electrospinning method and easily produce a nonwoven fabric formed from nanofibers. Here, the average diameter of the above nanofibers may be within a range from 1 to 1,000 nm. The above average diameter may be preferably within a range from 10 to 800 nm, and more preferably from 50 to 600 nm.

### (Method of producing polyimide precursor)

A polyimide resin precursor may be produced according to a known method. In one embodiment, a method of producing a polyimide resin precursor includes a polymerization step of reacting a diamine with a tetracarboxylic dianhydride in an organic solvent. In a preferred embodiment, the organic solvent includes a dimethylacetamide. Compounds that can be used as raw materials are as described above. In the case of producing an end-capped polyamic acid, a step of treating with an end-capping agent may be further included in addition to the above polymerization step. The polymerization step and the treatment step may be performed separately, or both steps may be performed simultaneously.

The organic solvent used in the polymerization step may be one or more polar solvents selected from N-methyl-2-pyrrolidone, N-ethyl-2-pyrrolidone, γ-butyrolactone, dimethyl sulfoxide, 1,3-dimethyl-2-imidazolidine, a dimethylacetamide, a dimethylformamide, N-acetylmorpholine, and the like. In one embodiment, it is preferable to use a dimethylacetamide or a mixed solvent including a dimethylacetamide and another solvent, as a polymerization solvent (synthetic solvent). Here, a polymerization solution obtained in the polymerization step can be directly used as a polyimide resin solution to produce a porous structure, such as a nonwoven fabric. The dimethylacetamide is preferably used as both a synthetic solvent and a diluting solvent described below. When the dimethylacetamide is used, excellent drying properties can be obtained.

The amount of the polymerization solvent used in the polymerization step is not particularly limited and can be adjusted appropriately. In one embodiment, from the viewpoint of solubility of the polyimide resin precursor, it is preferable that the amount used of the polymerization solvent be within a range from 50 to 1,000 parts by mass relative to the total amount of 100 parts by mass of the diamine and the tetracarboxylic dianhydride. The amount used of the above polymerization solvent may be more preferably within a range from 200 to 1,000 parts by mass, and even more preferably from 300 to 800 parts by mass. The reaction temperature is not particularly limited and is generally preferably within a range from 0°C to 180°C. The polymerization reaction is preferably performed under an atmosphere of nitrogen or the like in order to reduce the influence of moisture in air.

### (Method of producing resin solution including polyimide resin precursor)

A resin solution including a polyimide resin precursor according to the present embodiment (hereinafter also referred to as resin solution) can be produced by mixing the polyimide resin precursor (polyamic acid) according to the above-described embodiment with an organic solvent. A dimethylacetamide is preferably used as an organic solvent. In particular, a resin solution including a dimethylacetamide can be favorably used to produce nonwoven fabrics.

Alternatively, the resin solution can be produced by using a reaction solution obtained with the method of producing the polyimide resin precursor described above, as is. In this case, a diluting solvent may be added as necessary. Thus, in one embodiment, the above method of producing a resin solution may include a polymerization step of reacting a diamine with a tetracarboxylic dianhydride in a solvent including a dimethylacetamide.

In another embodiment, the above production method includes a polymerization step of reacting a diamine with a tetracarboxylic dianhydride in a solvent, and a step of adding a diluting solvent to the obtained reaction solution or the polyimide resin precursor. In this embodiment, the solvent and/or diluting solvent used in the polymerization step preferably includes at least a dimethylacetamide.

The amount contained of the polyimide resin precursor in the resin solution of the above embodiment can be appropriately set and is not particularly limited. In a preferred embodiment, from the viewpoint of a balance with other components, the amount contained of the polyamic acid in the resin solution is preferably 5% by mass or more, more preferably 10% by mass or more, and even more preferably 15% by mass or more. In contrast, the above amount is preferably 50% by mass or less, more preferably 40% by mass or less, and even more preferably 30% by mass or less. By adjusting the amount contained of the polyamic acid in the resin solution within the above ranges, it becomes easy to obtain fibers having sufficient strength during spinning, and it is possible to control a decline in fluidity and the like, and keep good workability.

### <Organic solvent>

The organic solvent, which configures the resin solution including the polyimide precursor, is not particularly limited as long as a polyimide resin precursor can be dissolved. In one embodiment, the organic solvent includes a dimethylacetamide. The resin solution including the polyimide resin precursor may include a solvent other than the dimethylacetamide as long as the effects of the present invention are not reduced.

As the other solvent, one or more polar solvents selected from N-methyl-2-pyrrolidone, N-ethyl-2-pyrrolidone, γ-butyrolactone, dimethyl sulfoxide, 1,3-dimethyl-2-imidazolidine, dimethylacetamide, dimethylformamide, N-acetylmorpholine, and the like, or water may be used. Furthermore, as an auxiliary solvent, an ether compound such as anisole, diethyl ether, or ethylene glycol; a ketone compound such as acetophenone, methyl ethyl ketone, methyl isobutyl ketone, cyclohexanone, or cyclopentanone; an aromatic hydrocarbon solvent such as xylene or toluene; or an alcohol such as ethanol or 2-propanol may optionally be used.

When a solvent other than dimethylacetamide is used as a solvent to make a mixed solvent, the amount contained of the dimethylacetamide in the mixed solvent is preferably 50% by mass or more, and more preferably 80% by mass or more, in order to sufficiently exhibit the effect of the preferred embodiment.

The resin solution may further include a component other than the polyimide resin precursor and the organic solvent as necessary. For example, the resin solution may further include a filler from the viewpoint of improving water resistance and the like of the porous structure such as a nonwoven fabric, as necessary.

The type of filler may be selected, in consideration of its water resistance, chemical resistance, and the like, in accordance with the application of the porous structure. Specific examples of the filler include metal powder, metal oxides (aluminum oxides, zinc oxides, tin oxides, titanium oxides, etc.), glass beads, glass flakes, glass particles, ceramics, silicon carbide, silicon oxides, calcium fluoride, carbon black, graphite, mica, and barium sulfate.

The resin solution including the above polyimide resin precursor may further include a surfactant as necessary. The resin solution including the surfactant can be favorably used to produce a nonwoven fabric. The surfactant is not particularly limited, but it is preferable that the resin solution be uniformly mixed and do not cause layer splitting or phase splitting until fibers are dried after spinning, and that a large amount of residue not be left when fibers are assembled to form a nonwoven fabric. The amount contained of the surfactant is not particularly limited, but, relative to the total mass of the resin solution, is preferably within a range from 0.01% to 10% by mass, and more preferably from 0.5% to 5% by mass. When the amount contained of the surfactant is adjusted to the above ranges, the uniform mixing state of the resin solution can be maintained, and the occurrence of defects in the production of the nonwoven fabric can be controlled.

In some embodiments, viscosity of the resin solution including the polyimide resin precursor is preferably within a range from 1 to 16 Pa·s, more preferably from 2 to 14 Pa·s, and even more preferably from 3 to 12 Pa·s. When the viscosity of the resin solution is adjusted to the above ranges, it becomes easy to produce a nonwoven fabric using an electrospinning method described below. The above viscosity is a value measured using a type B viscometer at 25°C.

### <3> Method of producing porous structure

The porous structure may be in the form of a porous film or a nonwoven fabric, and can be produced according to a known method using a resin solution including at least a polyimide resin precursor and an organic solvent. Imidization of the polyimide resin precursor is advanced by heating during the production of the porous structure to form a polyimide resin. The imidization percentage of the porous structure obtained after heating is preferably 50% or more, more preferably 80% or more, and even more preferably 90% or more. The imidization percentage can be easily adjusted by changing the heating temperature and heating time.

A porous film can be produced according to a known production method. For example, a coating film can be formed on a substrate using a resin solution including a polyimide resin precursor (first component), a solvent capable of dissolving the polyimide resin precursor (second component), and a third component such as a poor solvent or a resin filler, and imidization can be promoted by heating the coating film to obtain a film containing a polyimide resin. In such a production method, voids are formed by performing a heat treatment where the second and third components are sufficiently removed. In some embodiments, the process may be performed in two stages with different heating conditions. For example, the first stage is preferably performed at a temperature where the solvents of the second and third components can be evaporated. Then, the second stage is preferably performed at a temperature where the resin filler of the third component can be burned away.

A nonwoven fabric can also be produced according to a known production method. In one embodiment, a nonwoven fabric can be produced by spinning a resin solution including a polyimide resin precursor and an organic solvent capable of dissolving the polyimide resin precursor, forming a fiber aggregate obtained by spinning into a predetermined shape while heating, and partially welding (bonding) fibers to each other. The bonding of fibers to each other is not limited to heating, but can also be performed, for example, by spraying a solution including a binder resin for bonding to the fiber aggregate formed from a polyimide resin. As the binder resin for bonding, a polyethersulfone resin (PES), a polyamide resin, an epoxy compound, an isocyanate compound, a melamine compound, or the like can be used alone or in a mixture of two or more. In some embodiments, additional heat treatment may be performed. In some embodiments, the heat treatment may be performed preferably in a temperature range from 100°C to 350°C, more preferably from 250°C to 350°C, and even more preferably from 300°C to 350°C. Such heat treatment tends to facilitate removal of residual solvents and increase strength of nonwoven fabrics. In particular, heat treatment in a temperature range above 300°C tends to make it easier to obtain higher strength through ring closure, cross-linking, and packing.

In another embodiment, a nonwoven fabric can be favorably produced according to the electrospinning method. The electrospinning method is a method where a high positive voltage is applied to a resin solution, and the resin solution is sprayed onto a grounded or a negatively charged surface, thereby causing fiber formation. Fibers having a small fiber diameter and excellent structural uniformity can be obtained. In addition, since fibers can be formed in a two-dimensional spread state on a target plate, a nonwoven fabric can be obtained without further processing the fibers again after spinning. The production of a nonwoven fabric using the electrospinning method can be performed according to a known method. In some embodiments, additional heat treatment may be performed as described above. The additional heat treatment tends to increase the strength of a nonwoven fabric. Thus, when the additional heat treatment is performed, a nonwoven fabric that has a desired electrolytic solution contact angle and water contact angle, and has high strength can be easily obtained. Since the nonwoven fabric produced using the electrospinning method is made from fine fibers, it is easy to balance porosity and mechanical strength. In one embodiment, a nonwoven fabric formed from nanofibers which are spun according to the electrospinning method has high porosity and good wettability by an electrolytic solution, and can be favorably used as a separator for lithium ion secondary batteries.

### EXAMPLES

Embodiments of the present invention will be described with reference to examples. However, the embodiments of the present invention are not limited to the following examples.

### 1. Preparation examples of polyamic acid solution

### (Preparation example 1)

An amount of 33.5 g of 4,4'-diaminodiphenyl ether, and 270.9 g of a dimethylacetamide were put into a flask equipped with a thermometer, a stirrer, and a condenser. Then, 36.5 g of a pyromellitic dianhydride was added into the flask while stirring in a stream of dried nitrogen. After stirring for four hours, the reaction was stopped, and polyamic acid solution 1 (resin solution 1) was obtained. The number average molecular weight of the polyamic acid measured as described below was 75,000.

### (Number average molecular weight)

A number average molecular weight (Mn) was measured using gel permeation chromatography (GPC) and converted using a standard polystyrene calibration curve. The calibration curve was approximated by a cubic equation using five sample sets (TSK standard POLYSTYRENE, manufactured by Tosoh Corporation) of standard polystyrene. GPC conditions are as follows.

| | |
|---|---|
| GPC equipment: | high-speed GPC equipment HLC-8320GPC (manufactured by Tosoh Corporation) |
| Detector: | ultraviolet absorption detector UV-8320 (manufactured by Tosoh Corporation) |
| Column: | Gelpack GL-S300MDT-5 (total two pieces) (manufactured by Showa Denko Materials Co., Ltd.) |
| Eluent: | THF/DMF = 1/1 (volume ratio) + LiBr (0.06 mol/L) + H₃PO₄ (0.06 mol/L) |
| Flow rate: | 1 mL/min |
| Column size: | 8 mm I.D. × 300 mm |
| Sample concentration: | 5 mg/1 mL |
| Injection volume: | 5 µL |
| Measurement temperature: | 40°C |

### (Preparation example 2)

An amount of 129.2 g of 4,4'-diaminodiphenyl ether, and 1,194.8 g of N-methylpyrrolidone were put into a flask equipped with a thermometer, a stirrer, and a condenser. Then, 140.8 g of a pyromellitic dianhydride was added while stirring in a stream of dried nitrogen. After stirring for four hours, the reaction was stopped, and polyamic acid solution 2 (resin solution 2) was obtained. The number average molecular weight of the polyamic acid measured in the same manner as in preparation example 1 was 65,000.

### 2. Production of porous structure

A porous structure including a polyimide resin was produced as described below using the resin solution prepared previously.

### (Example 1) PI-1 nanofiber nonwoven fabric

Using the resin solution 1 (solid fraction 20%, viscosity 40 Pa·s) obtained in preparation example 1, fibers were formed using a nanofiber electrospinning device (NANON-04, manufactured by MECC CO., LTD.) under the following spinning conditions to obtain a nonwoven fabric. Note that the viscosity of the above solution was measured using a type B viscometer at 25°C. The same applies to the viscosity of a solution described below.

| | | | |
|---|---|---|---|
| Flow rate: | 1.0 ml/hr, distance between electrodes: | 150 mm, voltage: | 20 kV |

Fiber diameters of multiple fibers were measured based on SEM (scanning electron microscope) images of the nonwoven fabric, and the average value was obtained. The average fiber diameter was 258 nm.

### (Example 2) PI-2 porous film

Acrylic particles were added at a concentration of 40% by mass to the resin solution 2 obtained in preparation example 2, and mixed to obtain a mixed solution. The mixed solution was applied to a substrate for peeling to form a coating film, and the coating film was pre-dried at 80°C under the atmosphere. Next, the temperature of the pre-dried coating film was raised to 370°C, and the acrylic particles were pyrolyzed to obtain a polyimide porous structure having a film thickness of 30 µm. The film was peeled from the glass substrate and used as a porous film for various evaluations. Note that when the surface of the film peeled from the glass substrate was observed using SEM (scanning electron microscope) images as described above, multiple voids having an opening diameter (pore size) of 1 to 5 µm were confirmed.

### (Reference example) PI-2 nonwoven fabric

An attempt was made to produce a nonwoven fabric using the resin solution 2 (solid fraction 20%, viscosity 20 Pa·s) obtained in preparation example 2 under the same conditions as in example 1, but the resin solution became droplets during spinning, and the nonwoven fabric could not be obtained.

### (Comparative example 1) PP porous film

A porous film made from polypropylene (PP) was used for various evaluations.

### 3. Evaluation of porous structures

Properties of porous structures obtained in examples 1, 2, and comparative example 1 were evaluated according to the following method. The results are shown in Table 1.

### (Contact angle measurement)

The contact angle between the porous structure (nonwoven fabric or porous film) and the liquid was measured using a contact angle meter CA-X manufactured by Kyowa Interface Science Co., Ltd. In the present specification, the contact angle means an angle between the liquid and the porous structure surface, which is measured 10 seconds after dropping one drop of liquid (approximately 30 to 50 µL) onto the surface of the porous structure using a syringe, and is the average value of multiple measurements.

In the measurement of the electrolytic solution contact angle, a solution was used that has the same composition as an electrolytic solution commonly used in lithium-ion secondary batteries. Specifically, an electrolytic solution including a nonaqueous solution, an electrolyte, and an additive was prepared and used as follows.

### (Preparation of electrolytic solution)

An amount of 1 mol/kg of lithium hexafluorophosphate (LiPF₆) was added as an electrolyte to a nonaqueous solvent mixed where ethylene carbonate (EC), ethyl methyl carbonate (EMC), and diethyl carbonate (DEC) = 3:5:5 (volume ratio), 1% by mass of vinylene carbonate (VC) was further added as an additive, and these were mixed to obtain an electrolytic solution.

### (Porosity)

The film thickness and mass of the porous structure cut to a predetermined size were measured. The mass per unit area (weighed value) was calculated based on the measured value, and the porosity of the porous structure was calculated according to the following equation. In the following equation, "thickness" means a film thickness obtained through the above measurement. 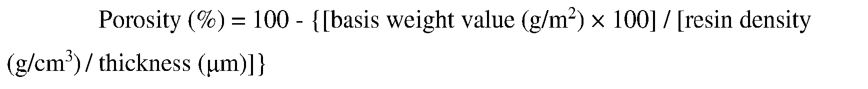 Porosity (%) = 100 - {[basis weight value (g/m2) × 100] / [resin density (g/cm3) / thickness (µm)]}

### [Table 1]

**Table 1**

| | Porous structure | Porosity (%) | Contact angle (° ) | |
|---|---|---|---|---|
| | | | Water | Electrolytic solution |
| Example 1 | PI-1 nanofiber nonwoven fabric | 75 | 100 | 0 (absorption) |
| Example 2 | PI-2 porous film | 20 | 84 | 41 |
| Comparative example 1 | PP porous film | 60 | 111 | 48 |

As indicated in Table 1, in one embodiment of the present invention, a polyimide resin can be used to form a porous structure. It is evident that the porous structures (examples 1 and 2) according to the present invention have a smaller electrolytic solution contact angle in comparison with a typical PP porous film (comparative example 1) as a separator for lithium ion secondary batteries. In particular, since the electrolytic solution contact angle is 0° in the form of the nonwoven fabric listed in example 1, it is evident that the nonwoven fabric can absorb the electrolytic solution and retain it inside. Thus, according to the present invention, it is possible to provide a porous structure that has much better wettability by an electrolytic solution than the conventional typical PP porous film, and can be favorably used as a separator.

### 4. Lithium ion secondary battery

In order to more concretely evaluate performances of the porous structure according to the present embodiment, a lithium ion secondary battery was produced using the nanofiber nonwoven fabric obtained in example 1, and the function as a separator was evaluated. Details are as follows.

### <Production of lithium secondary battery>

A lithium secondary battery was produced as follows.

### (Production of separator)

The nanofiber nonwoven fabric obtained in example 1 was heat-treated at 300°C for 30 minutes, and used as a separator. Note that the electrolytic solution contact angle and water contact angle of the nanofiber nonwoven fabric after heat treatment were measured according to the method described above, and they were almost the same.

### (Production of negative electrode)

A silicon-based active material (Si alloy) and a carbon-based active material (graphite, SMGYM2 manufactured by Hitachi Chemical Company, Ltd.) were used as the negative electrode active material. The negative electrode active material and a polyamideimide binder were mixed in such a manner that the capacity density was 600 mAh/kg. Specifically, they were mixed in such a manner that the mass ratio of solid fractions (carbon-based active material : silicon-based active material : polyamideimide) was 105:45:25, and NMP was added to adjust the viscosity to obtain a slurry-like negative electrode mixture.

The negative electrode mixture thus obtained was applied to one side of a current collector (metal foil (Cu, 10 µm)) in a substantially uniform and homogeneous manner. Next, the coating film was subjected to drying treatment, and then compression forming was performed using pressing to obtain a laminate of a current collector / negative electrode composite layer. Next, curing treatment was performed on the negative electrode composite layer by heating the laminate at 270°C for 30 minutes.

### (Production of secondary battery)

A positive electrode mixture including NCM111 (nickel cobalt manganese oxide, manufactured by BASF Toda Battery Materials LLC) was prepared as a positive electrode active material. A positive electrode mixture layer was formed on one side of a current collector (metal foil (Al, 15 µm)) using the positive electrode mixture, and a positive electrode (current collector / positive electrode mixture layer) was obtained. This positive electrode, the negative electrode obtained as described above, and a separator (nanofiber nonwoven fabric after heat treatment) were placed in a cell. By further injecting an electrolytic solution into the cell, a secondary battery was produced. A solution including ethylene carbonate (EC) / ethyl methyl carbonate (EMC) (1 vol / 2 vol) and vinylene carbonate (VC) (1 wt%) was used as the electrolytic solution.

As a comparison, the PP porous film obtained in comparative example 1 was used as a separator, and except for this, a secondary battery was produced in the same manner as described above.

### <Evaluation of lithium secondary battery>

A capacity retention percentage of the secondary battery obtained as described above was measured according to the following method.

### (Measurement of discharge capacity retention percentage)

The resulting secondary battery was subjected to a charge / discharge cycle test at a temperature of 25°C using the following method.

First, the battery was charged with a current of 0.5 C until the voltage reached 4.2 V (CC charging). Next, the battery was charged with a voltage of 4.2 V until the current reached 0.01 C (CV charging). After leaving the battery for 30 minutes, the battery was discharged with a current of 0.5 C until the voltage reached 3.23 V (CC discharging). Then, a series of operations of CC charging, CV charging, and CC discharging in one cycle was performed for 100 cycles.

Next, the sum of time-integrated values of the current in CC charging and CV charging of the 1^{st} cycle was used as a charge capacity (mAh) of the 1^{st} cycle, and a time-integrated value of the current in CC discharging of the 1^{st} cycle was obtained as a discharge capacity (mAh) of the 1^{st} cycle. Similarly, a discharge capacity (mAh) of the 100^{th} cycle was obtained, and the discharge capacity retention percentage of the battery at the 100^{th} cycle was obtained according to (equation 2) below. (Equation 2): 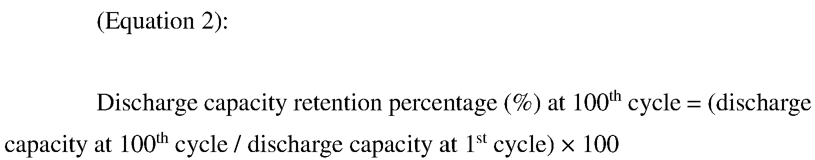 Discharge capacity retention percentage (%) at 100th cycle = (discharge capacity at 100th cycle / discharge capacity at 1st cycle) × 100

In addition, relative values of the discharge capacity retention percentage (%) obtained above were calculated, assuming that the discharge capacity retention percentage at the 100^{th} cycle of a battery for comparison (battery using the PP porous film obtained in comparative example 1 as a separator) was 100. The results are shown in Table 2.

### [Table 2]

**Table 2**

| | Separator configuration | Capacity retention percentage at 100th cycle relative value |
|---|---|---|
| Comparative example 1 | PP porous film | 100 |
| Example 1 | PI-1 nanofiber nonwoven fabric | 120 |

As evident from the results shown in Table 2, it is known that when the porous structure (nonwoven fabric) according to the present embodiment is used as a separator, the battery performance can be improved in comparison with the conventional typical separator (comparative example).

## Claims

1. A porous structure comprising:
a polyimide resin, wherein
the porous structure has a porosity of 20% or more.

2. The porous structure according to claim 1, wherein
a contact angle of water is 90° or more.

3. The porous structure according to claim 1, wherein
the porous structure is used as a separator for a battery.

4. The porous structure according to claim 1, wherein
a contact angle of an electrolytic solution is 10° or less.

5. The porous structure according to claim 4, wherein
the porous structure is used as a separator for a lithium ion secondary battery.

6. The porous structure according to claim 1, wherein
the porous structure is a nonwoven fabric formed from nanofibers including a polyimide resin.

7. The porous structure according to claim 6, wherein
the nanofibers have an average diameter of 1 to 1,000 nm.
